(19) Europäisches Patentamt
European Patent Office
Office européen des brevets

(11) **EP 4 340 309 A1**

(12) **EUROPEAN PATENT APPLICATION**

(43) Date of publication:
**20.03.2024 Bulletin 2024/12**

(21) Application number: **23196766.2**

(22) Date of filing: **12.09.2023**

(51) International Patent Classification (IPC):
***H04L 27/26*** *(2006.01)*

(52) Cooperative Patent Classification (CPC):
**H04L 27/2602; H04L 27/2613; H04L 27/26132;
H04L 27/2614; H04L 27/2621**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 US 202263375554 P
23.08.2023 US 202318237053**

(71) Applicant: **MediaTek Inc.
30078 Hsinchu City (TW)**

(72) Inventors:
• **HU, Shengquan
San Jose, 95134 (US)**
• **LIU, Jianhan
San Jose, 95134 (US)**
• **PARE, Jr., Thomas Edward
San Jose, 95134 (US)**

(74) Representative: **Hoefer & Partner Patentanwälte
mbB
Pilgersheimer Straße 20
81543 München (DE)**

(54) **STF SEQUENCE DESIGN FOR WIDE BANDWIDTHS IN WIRELESS COMMUNICATIONS**

(57) Various schemes pertaining to short training field, STF, sequence design for wide bandwidths in wireless communications are described. A processor of an apparatus generates an STF of a physical-layer protocol data unit, PPDU, by using a predefined STF base sequence (1010). The processor then performs a wireless communication in a 240MHz, 480MHz or 640MHz bandwidth with the PPDU (1020).

FIG. 10

EP 4 340 309 A1

**Description**

**CROSS REFERENCE TO RELATED PATENT APPLICATION**

The present disclosure is part of a non-provisional patent application claiming the priority benefit of U.S. Provisional Patent Application No. 63/375,554, filed 14 September 2022, the content of which being incorporated by reference in its entirety.

**TECHNICAL FIELD**

The present disclosure is generally related to wireless communications and, more particularly, to techniques pertaining to short training field (STF) sequence design for wide bandwidths in wireless communications.

**BACKGROUND**

Unless otherwise indicated herein, approaches described in this section are not prior art to the claims listed below and are not admitted as prior art by inclusion in this section.

In wireless communications, such as Wi-Fi (or WiFi) and wireless local area networks (WLANs) in accordance with one or more Institute of Electrical and Electronics Engineers (IEEE) 802.11 standards, achieving high throughput is one of the key objectives for next-generation wireless connectivity. Wider bandwidths, such as 240MHz, 480MHz and 640MHz, have been considered as potential candidates for next-generation WLAN. However, at present time, how to achieve high throughput in wide bandwidths, such as 240MHz, 480MHz and 640MHz, remains to be defined. Therefore, there is a need for a solution of STF sequence design for wide bandwidths in wireless communications.

**SUMMARY**

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to STF sequence design for wide bandwidths in wireless communications. Under various proposed schemes described herein, an STF sequence design may be utilized for wide bandwidths such as 240MHz, 480MHz and 640MHz. Moreover, several design options are proposed with peak-to-average power ratio (PAPR) performance evaluated for comparison. It is believed that implementations of the proposed schemes may address or otherwise alleviate aforementioned issues. A method and an apparatus according to the invention are defined in the independent claims. The dependent claims define preferred embodiments thereof.

In one aspect, a method may involve generating an STF of a physical-layer protocol data unit (PPDU) by using a predefined STF base sequence. The method may also involve performing a wireless communication in a 240MHz, 480MHz or 640MHz bandwidth with the PPDU.

In another aspect, an apparatus may include a transceiver and a processor coupled to the transceiver. The transceiver may be configured to transmit and receive wirelessly. The processor may be configured to generate an STF of a PPDU by using a predefined STF base sequence. The processor may also be configured to perform a wireless communication in a 240MHz, 480MHz or 640MHz bandwidth with the PPDU.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

**BRIEF DESCRIPTION OF THE DRAWINGS**

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.

FIG. 1 is a diagram of an example network environment in which various solutions and schemes in accordance with the present disclosure may be implemented.

FIG. 2 is a diagram of an example scenario in accordance with an implementation of the present disclosure.

FIG. 3 is a diagram of an example scenario in accordance with an implementation of the present disclosure.

FIG. 4 is a diagram of an example scenario in accordance with an implementation of the present disclosure.

FIG. 5 is a diagram of an example scenario in accordance with an implementation of the present disclosure.

FIG. 6 is a diagram of an example scenario in accordance with an implementation of the present disclosure.

FIG. 7 is a diagram of an example scenario in accordance with an implementation of the present disclosure.

FIG. 8 is a diagram of an example scenario in accordance with an implementation of the present disclosure.

FIG. 9 is a block diagram of an example communication system in accordance with an implementation of the present disclosure.

FIG. 10 is a flowchart of an example process in accordance with an implementation of the present disclosure.

## DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### *Overview*

Implementations in accordance with the present disclosure relate to various techniques, methods, schemes and/or solutions pertaining to STF sequence design for wide bandwidths in wireless communications. According to the present disclosure, a number of possible solutions may be implemented separately or jointly. That is, although these possible solutions may be described below separately, two or more of these possible solutions may be implemented in one combination or another.

It is noteworthy that, in the present disclosure, a regular RU (rRU) refers to a RU with tones that are continuous (e.g., adjacent to one another) and not interleaved, interlaced or otherwise distributed. Moreover, a 26-tone regular RU may be interchangeably denoted as RU26 (or rRU26), a 52-tone regular RU may be interchangeably denoted as RU52 (or rRU52), a 106-tone regular RU may be interchangeably denoted as RU106 (or rRU106), a 242-tone regular RU may be interchangeably denoted as RU242 (or rRU242), and so on. Moreover, an aggregate (26+52)-tone regular multi-RU (MRU) may be interchangeably denoted as MRU78 (or rMRU78), an aggregate (26+106)-tone regular MRU may be interchangeably denoted as MRU132 (or rMRU132), an aggregate (484+242)-tone regular MRU may be interchangeably denoted as MRU726 or MRU(484+242) (or rMRU726) and so on.

Since the above examples are merely illustrative examples and not an exhaustive listing of all possibilities, the same applies to regular RUs, distributed-tone RUs, MRUs, and distributed-tone MRUs of different sizes (or different number of tones). It is also noteworthy that, in the present disclosure, a bandwidth of 20MHz may be interchangeably denoted as BW20 or BW20M, a bandwidth of 40MHz may be interchangeably denoted as BW40 or BW40M, a bandwidth of 80MHz may be interchangeably denoted as BW80 or BW80M, a bandwidth of 160MHz may be interchangeably denoted as BW160 or BW160M, a bandwidth of 240MHz may be interchangeably denoted as BW240 or BW240M, a bandwidth of 320MHz may be interchangeably denoted as BW320 or BW320M, a bandwidth of 480MHz may be interchangeably denoted as BW480 or BW480M, and a bandwidth of 640MHz may be interchangeably denoted as BW640 or BW640M.

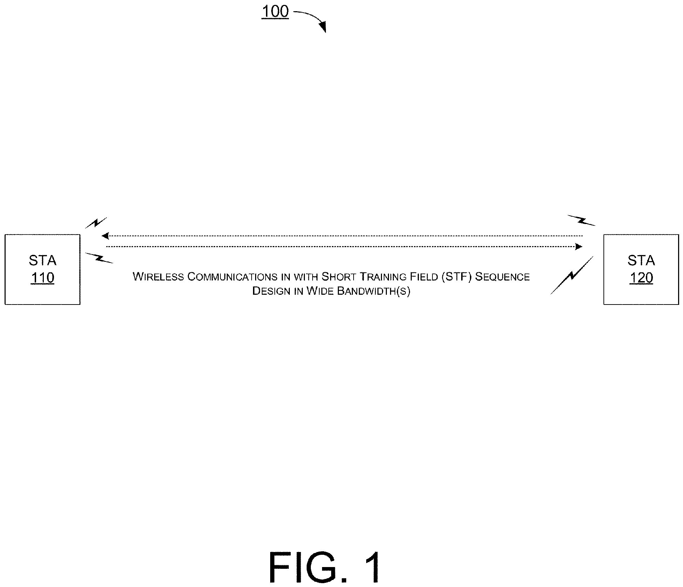

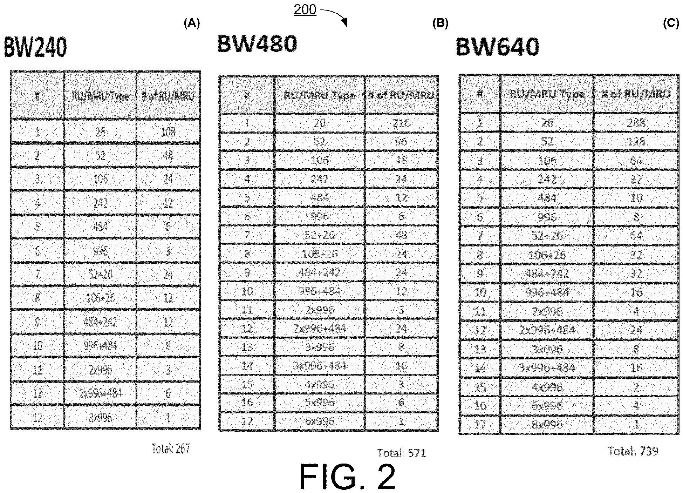

FIG. 1 illustrates an example network environment 100 in which various solutions and schemes in accordance with the present disclosure may be implemented. FIG. 2 ~ FIG. 10 illustrate examples of implementation of various proposed schemes in network environment 100 in accordance with the present disclosure. The following description of various proposed schemes is provided with reference to FIG. 1 ~ FIG. 10.

Referring to FIG. 1, network environment 100 may involve at least a station (STA) 110 communicating wirelessly with a STA 120. Either of STA 110 and STA 120 may function as an access point (AP) STA or, alternatively, a non-AP STA. In some cases, STA 110 and STA 120 may be associated with a basic service set (BSS) in accordance with one or more IEEE 802.11 standards (e.g., IEEE 802.11be and/or future-developed standards). Each of STA 110 and STA 120 may be configured to communicate with each other by utilizing the STF sequence design for wide bandwidths in wireless communications in accordance with various proposed schemes described below. That is, either or both of STA 110 and STA 120 may function as a "user" in the proposed schemes and examples described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

FIG. 2 illustrates an example scenario 200 in accordance with an implementation of the present disclosure. Scenario 200 may pertain to RU/MRU for BW240, BW480 and BW640 considered in STF PAPR evaluations. Part (A) of FIG. 2 shows a list of RU/MUR types (in terms of number of tones in a given RU/MRU) and respective numbers of RU/MRUs transmittable in BW240. Part (B) of FIG. 2 shows a list of RU/MUR types (in terms of number of tones in a given RU/MRU) and respective numbers of RU/MRUs transmittable in BW480. Part (C) of FIG. 2 shows a list of RU/MUR types (in terms of number of tones in a given RU/MRU) and respective numbers of RU/MRUs transmittable in BW640.

Under various proposed schemes in accordance with the present disclosure with respect to ultra-high reliability (UHR) STF (UHR-STF) for wide bandwidths, a predefined STF base sequence may be used in constructing or otherwise generating a UHR-STF for wide bandwidths. For instance, an IEEE 802.11ax high-efficiency (HE) STF (HE-STF) may be reused as a basic building sequence for UHR-STF for wide bandwidths such as 240MHz, 480MHz and 640MHz. Under the proposed scheme, for wide bandwidths of 240MHz, 480MHz and 640MHz, an 80MHz HE-STF sequence and/or extreme-high throughput (EHT) STF (EHT-STF) sequence may be reused, with additional coefficients applied on each 80MHz frequency subblock or segment. Under the proposed schemes, an 80MHz segment sequence for downlink (DL) multi-user (MU) PPDU (herein denoted as "EHTS80_1x") may be expressed as: EHTS80_1x = [M, 1, (-1) * M, 0, (-1) * M, 1, (-1) * M]. Additionally, an 80MHz segment sequence for uplink (UL) trigger-based (TB) PPDU (herein denoted as "EHTS80_2x") may be expressed as: EHTS80_2x = [M, -1, M, -1, -M, -1, M, 0, -M, 1, M, 1, -M, 1, -M]. Here, M denotes an 80MHz sub-sequence and M = [-1, -1, -1, 1, 1, 1, -1, 1, 1, 1, -1, 1, 1, -1, 1]. It is believed that the coefficients help improve PAPR performance over a variety of RU sizes for 240MHz, 480MHz and 640MHz.

Under a proposed scheme in accordance with the present disclosure with respect to STF sequence design for the 240MHz bandwidth, a UHR-STF for DL MU PPDU (herein denoted as "UHRS$_{-1520:16:1520}$") and a UHR-STF for UL TB PPDU (herein denoted as "UHRS$_{-1528:8:1528}$") may be provided. The UHRS$_{-1520:16:1520}$ may be expressed as: UHRS$_{-1520:16:1520}$ = [c(1) * EHTS80_1x, 0, c(2) * EHTS80_1x, 0, c(3) * EHTS80_1x] * (1 +j) / sqrt(2). Here, each of c(1), c(2) and c(3) represents a respective optimized coefficient. Under the proposed scheme, with respect to UHR-STF for DL MU PPDU, a vector C of a combination of optimized coefficients = [c(1) c(2) c(3)], and C = [1 -1 -1] or, alternatively, C = [-1 -1 1] or, alternatively, C = [-1 1 1]. The UHRS$_{-1528:8:1528}$ may be expressed as: UHRS$_{-1528:8:1528}$ = [c(1) * EHTS80_2x, 0, c(2) * EHTS80_2x, 0, c(3) * EHTS80_2x] * (1 + j) / sqrt(2). Here, each of c(1), c(2) and c(3) represents a respective optimized coefficient. Under the proposed scheme, with respect to UHR-STF for UL TB PPDU, the vector C of a combination of optimized coefficients = [c(1) c(2) c(3)], and C = [1 -1 -1] or, alternatively, C = [-1 -1 1] or, alternatively, C = [-1 1 1]. It is noteworthy that the values of the EHT-STF sequence at indices -8, -1016, -1032, -2040, 2040, 1032, 1016 and 8 may be 0.

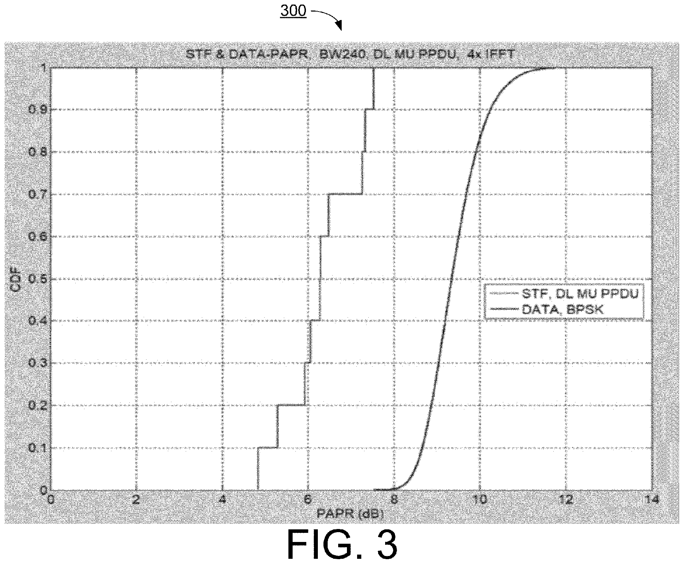

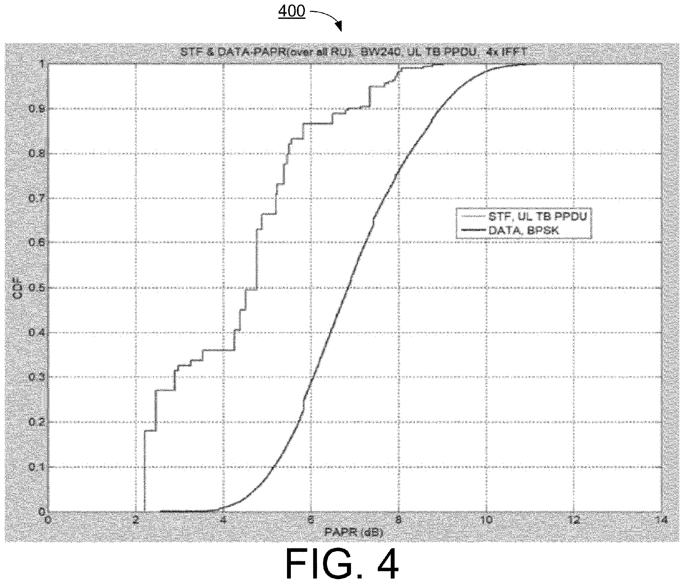

FIG. 3 illustrates an example scenario 300 of comparison of PAPR curves of STF and data in a simulation for a DL MU PPDU in the 240MHz bandwidth. It is assumed that, for DL, > 68% of spectrum is allocated. FIG. 4 illustrates an example scenario 400 of comparison of PAPR curves of STF and data in a simulation for an UL TB PPDU in the 240MHz bandwidth. The RUs used in the simulations are MRU(2 x 996), MRU(2 x 996 + 484) and MRU(3 x 996). As can be seen in FIG. 3 and FIG. 4, PAPR may be reduced with use of the optimized coefficients, thereby improving PAPR performance.

Under a proposed scheme in accordance with the present disclosure with respect to STF sequence design for the 480MHz bandwidth, a UHR-STF for DL MU PPDU (herein denoted as "UHRS$_{-3056:16:3056}$") and a UHR-STF for UL TB PPDU (herein denoted as "UHRS$_{-3064:8:3064}$") may be provided. The UHRS$_{-3056:16:3056}$ may be expressed as: UHRS$_{-3056:16:3056}$ = [c(1) * EHTS80_1x, 0, c(2) * EHTS80_1x, 0, c(3) * EHTS80_1x, 0, c(4) * EHTS80_1x, 0, c(5) * EHTS80_1x, 0, c(6) * EHTS80_1x] * (1 + j) / sqrt(2). Here, each of c(1), c(2), c(3), c(4), c(5) and c(6) represents a respective optimized coefficient. Under the proposed scheme, with respect to UHR-STF for DL MU PPDU, a vector C of a combination of optimized coefficients = [c(1) c(2) c(3) c(4) c(5) c(6)], and C = [1 1 1 1 -1 -1] or, alternatively, C = [1 1 -1 -1 -1 -1]. The UHRS$_{-3064:8:3064}$ may be expressed as: UHRS$_{-3064:8:3064}$ = [c(1) * EHTS80_2x, 0, c(2) * EHTS80_2x, 0, c(3) * EHTS80_2x, 0, c(4) * EHTS80_2x, 0, c(5) * EHTS80_2x, 0, c(6) * EHTS80_2x] * (1 + j) / sqrt(2). Here, each of c(1), c(2), c(3), c(4), c(5) and c(6) represents a respective optimized coefficient. Under the proposed scheme, with respect to UHR-STF for UL TB PPDU, the vector C of a combination of optimized coefficients = [c(1) c(2) c(3) c(4) c(5) c(6)], and C = [1 1 1 -1 -1 1] or, alternatively, C = [1 1 -1 1 -1 1]. It is noteworthy that the values of the EHT-STF sequence at indices -3064, -2056, -2040, -1032, -1016, 1016, 1032, 2040, 2056 and 3064 may be 0.

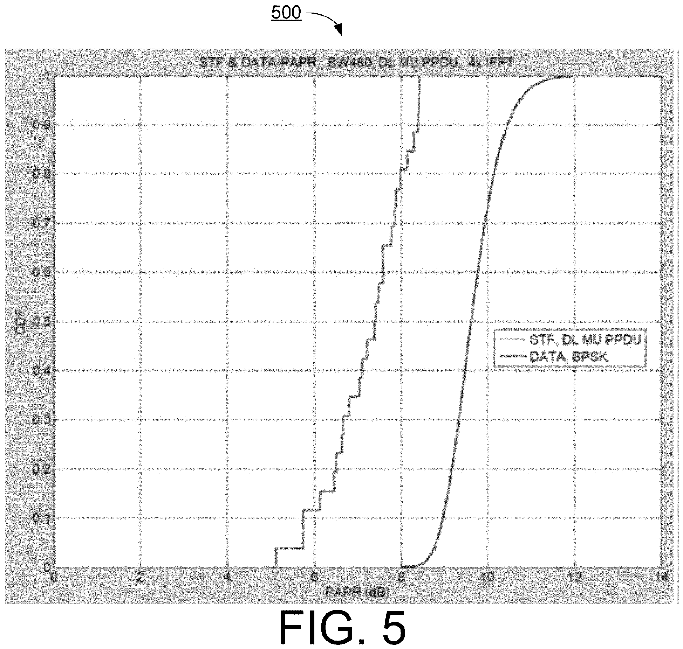

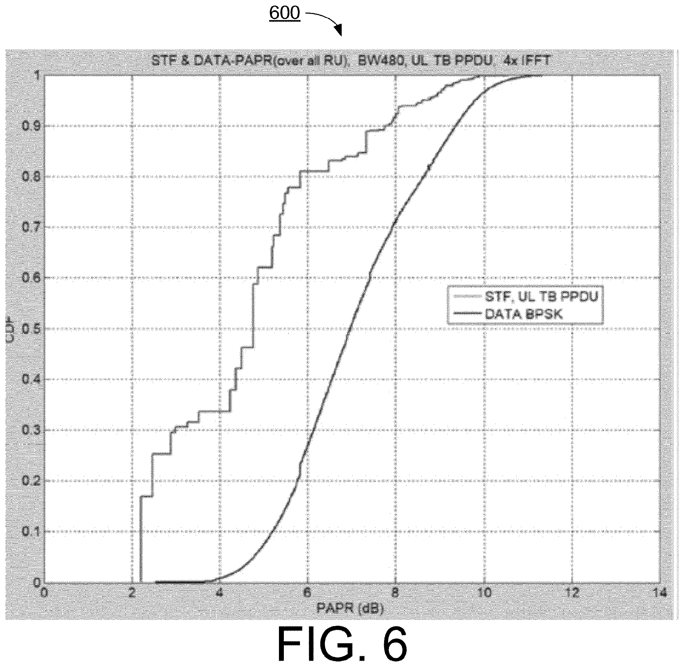

FIG. 5 illustrates an example scenario 500 of comparison of PAPR curves of STF and data in a simulation for a DL MU PPDU in the 480MHz bandwidth. FIG. 6 illustrates an example scenario 600 of comparison of PAPR curves of STF and data in a simulation for an UL TB PPDU in the 480MHz bandwidth. The RUs used in the simulations are MRU(2 x 996), MRU(2 x 996 + 484) and MRU(3 x 996). As can be seen in FIG. 5 and FIG. 6, PAPR may be reduced with use of the optimized coefficients, thereby improving PAPR performance.

Under a proposed scheme in accordance with the present disclosure with respect to STF sequence design for the 640MHz bandwidth, a UHR-STF for DL MU PPDU (herein denoted as "$UHRS_{-3056:16:3056}$") and a UHR-STF for UL TB PPDU (herein denoted as "$UHRS_{-3064:8:3064}$") may be provided. The $UHRS_{-3056:16:3056}$ may be expressed as: $UHRS_{-3056:16:3056}$ = [c(1) * EHTS80_1x, 0, c(2) * EHTS80_1x, 0, c(3) * EHTS80_1x, 0, c(4) * EHTS80_1x, 0, c(5) * EHTS80_1x, 0, c(6) * EHTS80_1x, 0, c(7) * EHTS80_1x, 0, c(8) * EHTS80_1x] * (1 + j) / sqrt(2). Here, each of c(1), c(2), c(3), c(4), c(5), c(6), c(7) and c(8) represents a respective optimized coefficient. Under the proposed scheme, with respect to UHR-STF for DL MU PPDU, a vector C of a combination of optimized coefficients = [c(1) c(2) c(3) c(4) c(5) c(6) c(7) c(8)], and C = [1 -1 -1 -1 -1 -1 -1 1] or, alternatively, C = [-1 1 1 1 1 1 1 -1]. The $UHRS_{-3064:8:3064}$ may be expressed as: $UHRS_{-3064:8:3064}$ = [c(1) * EHTS80_2x, 0, c(2) * EHTS80_2x, 0, c(3) * EHTS80_2x, 0, c(4) * EHTS80_2x, 0, c(5) * EHTS80_2x, 0, c(6) * EHTS80_2x, 0, c(7) * EHTS80_2x, 0, c(8) * EHTS80_2x] * (1 + j) / sqrt(2). Here, each of c(1), c(2), c(3), c(4), c(5), c(6), c(7) and c(8) represents a respective optimized coefficient. Under the proposed scheme, with respect to UHR-STF for UL TB PPDU, the vector C of a combination of optimized coefficients = [c(1) c(2) c(3) c(4) c(5) c(6) c(7) c(8)], and C = [1 1 1 -1 1 1 1 -1] or, alternatively, C = [1 1 1 -1 1 1 -1 -1]. It is noteworthy that the values of the EHT-STF sequence at indices -4088, -3080, -3064, -2056, -2040, -1032, -1016, 1016, 1032, 2040, 2056, 3064, 3080 and 4088 may be 0.

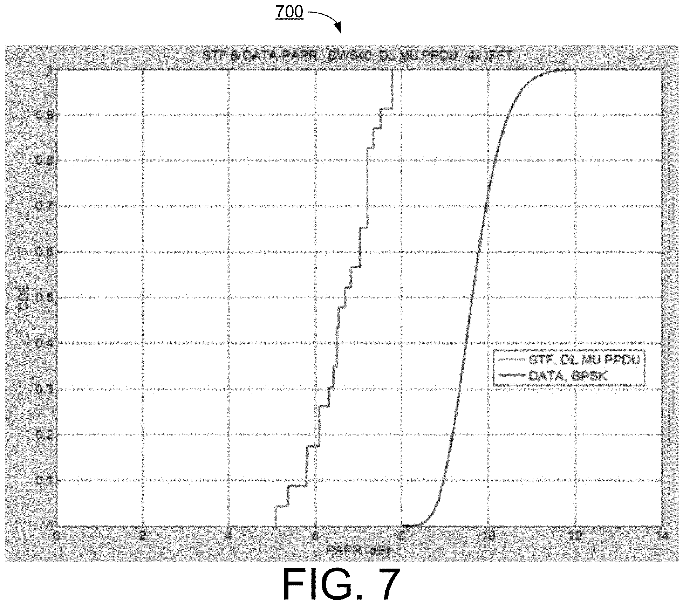

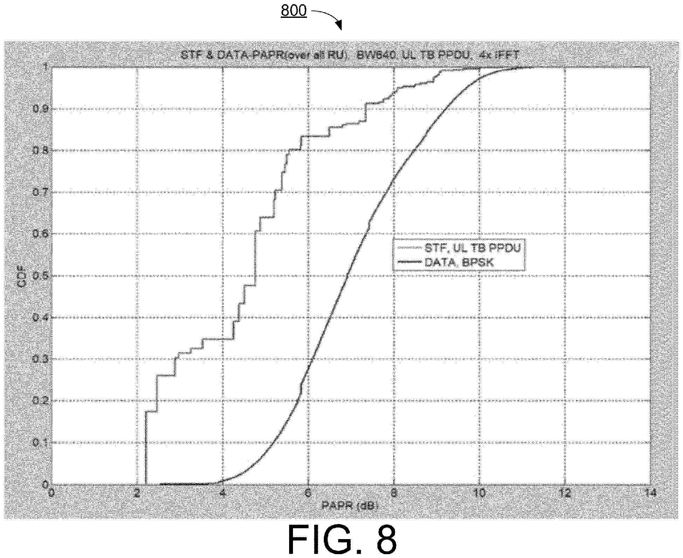

FIG. 7 illustrates an example scenario 700 of comparison of PAPR curves of STF and data in a simulation for a DL MU PPDU in the 640MHz bandwidth. FIG. 8 illustrates an example scenario 800 of comparison of PAPR curves of STF and data in a simulation for an UL TB PPDU in the 640MHz bandwidth. The RUs used in the simulations are MRU(2 x 996), MRU(2 x 996 + 484) and MRU(3 x 996). As can be seen in FIG. 7 and FIG. 8, PAPR may be reduced with use of the optimized coefficients, thereby improving PAPR performance.

### *Illustrative Implementations*

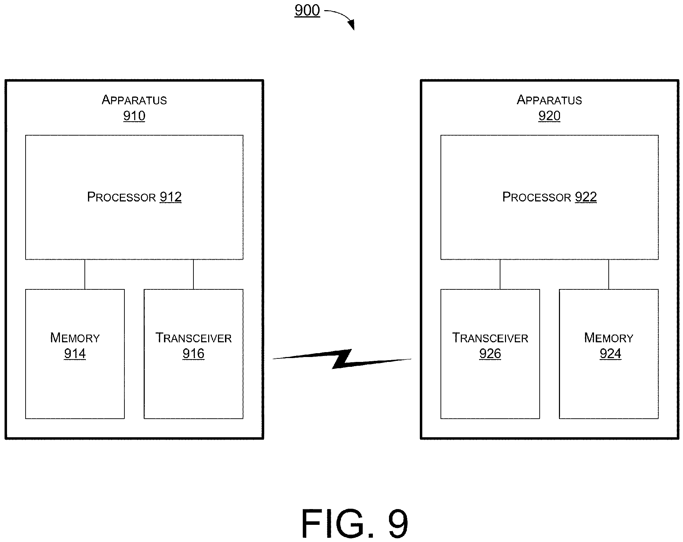

FIG. 9 illustrates an example system 900 having at least an example apparatus 910 and an example apparatus 920 in accordance with an implementation of the present disclosure. Each of apparatus 910 and apparatus 920 may perform various functions to implement schemes, techniques, processes and methods described herein pertaining to STF sequence design for wide bandwidths in wireless communications, including the various schemes described above with respect to various proposed designs, concepts, schemes, systems and methods described above as well as processes described below. For instance, apparatus 910 may be an example implementation of communication entity 110, and apparatus 920 may be an example implementation of communication entity 120.

Each of apparatus 910 and apparatus 920 may be a part of an electronic apparatus, which may be a STA or an AP, such as a portable or mobile apparatus, a wearable apparatus, a wireless communication apparatus or a computing apparatus. For instance, each of apparatus 910 and apparatus 920 may be implemented in a smartphone, a smart watch, a personal digital assistant, a digital camera, or a computing equipment such as a tablet computer, a laptop computer or a notebook computer. Each of apparatus 910 and apparatus 920 may also be a part of a machine type apparatus, which may be an IoT apparatus such as an immobile or a stationary apparatus, a home apparatus, a wire communication apparatus or a computing apparatus. For instance, each of apparatus 910 and apparatus 920 may be implemented in a smart thermostat, a smart fridge, a smart door lock, a wireless speaker or a home control center. When implemented in or as a network apparatus, apparatus 910 and/or apparatus 920 may be implemented in a network node, such as an AP in a WLAN.

In some implementations, each of apparatus 910 and apparatus 920 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 910 and apparatus 920 may be implemented in or as a STA or an AP. Each of apparatus 910 and apparatus 920 may include at least some of those components shown in FIG. 9 such as a processor 912 and a processor 922, respectively, for example. Each of apparatus 910 and apparatus 920 may further include one or more other components not pertinent to the proposed scheme of the present disclosure (e.g., internal power supply, display device and/or user interface device), and, thus, such component(s) of apparatus 910 and apparatus 920 are neither shown in FIG. 9 nor described below in the interest of simplicity and brevity.

In one aspect, each of processor 912 and processor 922 may be implemented in the form of one or more single-core processors, one or more multi-core processors, one or more RISC processors or one or more CISC processors. That is, even though a singular term "a processor" is used herein to refer to processor 912 and processor 922, each of processor 912 and processor 922 may include multiple processors in some implementations and a single processor in other implementations in accordance with the present disclosure. In another aspect, each of processor 912 and processor 922 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 912 and processor 922 is a special-purpose machine specifically designed, arranged and configured to perform specific tasks including those pertaining to STF sequence design for wide bandwidths in wireless communications in accordance with various implementations of the present disclosure. For instance, each of processor 912 and processor 922 may be configured with hardware components, or circuitry, implementing one, some or all of the examples described and illustrated herein.

In some implementations, apparatus 910 may also include a transceiver 916 coupled to processor 912. Transceiver 916 may be capable of wirelessly transmitting and receiving data. In some implementations, apparatus 920 may also include a transceiver 926 coupled to processor 922. Transceiver 926 may include a transceiver capable of wirelessly transmitting and receiving data.

In some implementations, apparatus 910 may further include a memory 914 coupled to processor 912 and capable of being accessed by processor 912 and storing data therein. In some implementations, apparatus 920 may further include a memory 924 coupled to processor 922 and capable of being accessed by processor 922 and storing data therein. Each of memory 914 and memory 924 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 914 and memory 924 may include a type of read-only memory (ROM) such as mask ROM, programmable ROM (PROM), erasable programmable ROM (EPROM) and/or electrically erasable programmable ROM (EEPROM). Alternatively, or additionally, each of memory 914 and memory 924 may include a type of non-volatile random-access memory (NVRAM) such as flash memory, solid-state memory, ferroelectric RAM (FeRAM), magnetoresistive RAM (MRAM) and/or phase-change memory.

Each of apparatus 910 and apparatus 920 may be a communication entity capable of communicating with each other using various proposed schemes in accordance with the present disclosure. For illustrative purposes and without limitation, a description of capabilities of apparatus 910, as communication entity 110, and apparatus 920, as communication entity 120, is provided below in the context of example process 1000. It is noteworthy that, although the example implementations described below are provided in the context of WLAN, the same may be implemented in other types of networks. Thus, although the following description of example implementations pertains to a scenario in which apparatus 910 functions as a transmitting device and apparatus 920 functions as a receiving device, the same is also applicable to another scenario in which apparatus 910 functions as a receiving device and apparatus 920 functions as a transmitting device.

### *Illustrative Processes*

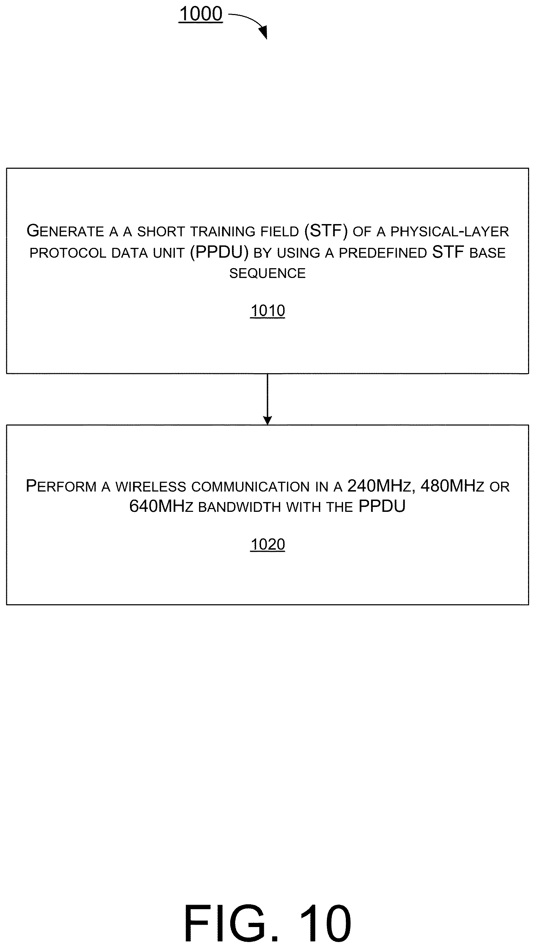

FIG. 10 illustrates an example process 1000 in accordance with an implementation of the present disclosure. Process 1000 may represent an aspect of implementing various proposed designs, concepts, schemes, systems and methods described above. More specifically, process 1000 may represent an aspect of the proposed concepts and schemes pertaining to STF sequence design for wide bandwidths in wireless communications in accordance with the present disclosure. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively in a different order. Furthermore, one or more of the blocks/sub-blocks of process 1000 may be executed repeatedly or iteratively. Process 1000 may be implemented by or in apparatus 910 and apparatus 920 as well as any variations thereof. Solely for illustrative purposes and without limiting the scope, process 1000 is described below in the context of apparatus 910 as communication entity 110 (e.g., a STA or AP) and apparatus 920 as communication entity 120 (e.g., a peer STA or AP) of a wireless network such as a WLAN in accordance with one or more of IEEE 802.11 standards. Process 1000 may begin at block 1010.

At 1010, process 1000 may involve processor 912 of apparatus 910 generating an STF of a PPDU by using a predefined STF base sequence. Process 1000 may proceed from 1010 to 1020.

At 1020, process 1000 may involve processor 912 performing, via transceiver 916, a wireless communication (e.g., with apparatus 920) in a 240MHz, 480MHz or 640MHz bandwidth with the PPDU.

In some implementations, the predefined STF base sequence may include an IEEE 802.11ax 80MHz HE-STF or IEEE 802.1The EHT-STF sequence. In such cases, in generating the STF, process 1000 may involve processor 912 repeating the 80MHz HE-STF or EHT-STF sequence and applying a combination of coefficients on each 80MHz frequency subblock or segment of the 240MHz, 480MHz or 640MHz bandwidth.

In some implementations, in generating the STF, process 1000 may involve processor 912 generating the STF of a DL MU PPDU or an UL TB PPDU based on: (i) M = [-1, -1, -1, 1, 1, 1, -1, 1, 1, 1, -1, 1, 1, -1, 1]; (ii) EHTS80_1x = [M, 1, (-1) * M, 0, (-1) * M, 1, (-1) * M]; and (iii) EHTS80_2x = [M, -1, M, -1, -M, -1, M, 0, -M, 1, M, 1, -M, 1, -M]. Here, M denotes an 80MHz sub-sequence, EHTS80_1x denotes an 80MHz segment sequence for the DL MU PPDU, and EHTS80_2x denotes an 80MHz segment sequence for the UL TB PPDU.

In some implementations, in generating the STF, process 1000 may involve processor 912 generating a UHR-STF of a DL MU PPDU using a combination of optimized coefficients such that the STF is used in the wireless communication in the 240MHz bandwidth to generate $UHRS_{-1520:16:1520}$ = [c(1) * EHTS80_1x, 0, c(2) * EHTS80_1x, 0, c(3) * EHTS80_1x] * (1 + j) / sqrt(2). Here, $UHRS_{-1520:16:1520}$ denotes the UHR-STF of the DL MU PPDU, each of c(1), c(2) and c(3) represents a respective optimized coefficient, a vector C of the combination of the optimized coefficients = [c(1) c(2) c(3)], and C = [1 -1 -1] or C = [-1 -1 1] or C = [-1 1 1].

In some implementations, in generating the STF, process 1000 may involve processor 912 generating a UHR-STF of an UL TB PPDU using a combination of optimized coefficients such that the STF is used in the wireless communication in the 240MHz bandwidth to generate $UHRS_{-1528:8:1528}$ = [c(1) * EHTS80_2x, 0, c(2) * EHTS80_2x, 0, c(3) * EHTS80_2x] * (1 + j) / sqrt(2). Here, $UHRS_{-1528:8:1528}$ denotes the UHR-STF of the UL TB PPDU, each of c(1), c(2) and c(3) represents a respective optimized coefficient, a vector C of the combination of the optimized coefficients = [c(1) c(2) c(3)], and C = [1 -1 -1] or C = [-1 -1 1] or C = [-1 1 1].

In some implementations, in generating the STF, process 1000 may involve processor 912 generating a UHR-STF of a DL MU PPDU using a combination of optimized coefficients such that the STF is used in the wireless communication in the 480MHz bandwidth to generate $UHRS_{-3056:16:3056}$ = [c(1) * EHTS80_1x, 0, c(2) * EHTS80_1x, 0, c(3) * EHTS80_1x, 0, c(4) * EHTS80_1x, 0, c(5) * EHTS80_1x, 0, c(6) * EHTS80_1x] * (1 + j) / sqrt(2). Here, $UHRS_{-3056:16:3056}$ denotes the UHR-STF of the DL MU PPDU, each of c(1), c(2), c(3), c(4), c(5) and c(6) represents a respective optimized coefficient, a vector C of the combination of the optimized coefficients = [c c(1) c(2) c(3) c(4) c(5) c(6)], and C = [1 1 1 1 -1 -1] or C = [1 1 -1 -1 -1 -1].

In some implementations, in generating the STF, process 1000 may involve processor 912 generating a UHR-STF of an UL TB PPDU using a combination of optimized coefficients such that the STF is used in the wireless communication in the 480MHz bandwidth to generate $UHRS_{-3064:8:3064}$ = [c(1) * EHTS80_2x, 0, c(2) * EHTS80_2x, 0, c(3) * EHTS80_2x, 0, c(4) * EHTS80_2x, 0, c(5) * EHTS80_2x, 0, c(6) * EHTS80_2x] * (1 + j) / sqrt(2). Here, $UHRS_{-3064:8:3064}$ denotes the UHR-STF of the UL TB PPDU, each of c(1), c(2), c(3), c(4), c(5) and c(6) represents a respective optimized coefficient, a vector C of the combination of the optimized coefficients = [c(1), c(2), c(3), c(4), c(5) and c(6)], and C = [1 1 1 -1 -1 1] or C = [1 1 -1 1 -1 -1].

In some implementations, in generating the STF, process 1000 may involve processor 912 generating a UHR-STF of a DL MU PPDU using a combination of optimized coefficients such that the STF is used in the wireless communication in the 640MHz bandwidth to generate $UHRS_{-3056:16:3056}$ = [c(1) * EHTS80_1x, 0, c(2) * EHTS80_1x, 0, c(3) * EHTS80_1x, 0, c(4) * EHTS80_1x, 0, c(5) * EHTS80_1x, 0, c(6) * EHTS80_1x, 0, c(7) * EHTS80_1x, 0, c(8) * EHTS80_1x] * (1 + j) / sqrt(2). Here, $UHRS_{-3056:16:3056}$ denotes the UHR-STF of the DL MU PPDU, each of c(1), c(2), c(3), c(4), c(5), c(6), c(7) and c(8) represents a respective optimized coefficient, a vector C of the combination of the optimized coefficients = [c(1) c(2) c(3) c(4) c(5) c(6) c(7) c(8)], and C = [1 -1 -1 -1 -1 -1 -1 1] or C = [-1 1 1 1 1 1 1 -1].

In some implementations, in generating the STF, process 1000 may involve processor 912 generating a UHR-STF of an UL TB PPDU using a combination of optimized coefficients such that the STF is used in the wireless communication in the 640MHz bandwidth to generate $UHRS_{-3064:8:3064}$ = [c(1) * EHTS80_2x, 0, c(2) * EHTS80_2x, 0, c(3) * EHTS80_2x, 0, c(4) * EHTS80_2x, 0, c(5) * EHTS80_2x, 0, c(6) * EHTS80_2x, 0, c(7) * EHTS80_2x, 0, c(8) * EHTS80_2x] * (1 + j) / sqrt(2). Here, $UHRS_{-3064:8:3064}$ denotes the UHR-STF of the UL TB PPDU, each of c(1), c(2), c(3), c(4), c(5), c(6), c(7) and c(8) represents a respective optimized coefficient, a vector C of the combination of the optimized coefficients = [c(1) c(2) c(3) c(4) c(5) c(6) c(7) c(8)], and C = [1 1 1 -1 1 1 1 -1] or C = [1 1 1 -1 1 1 -1 -1].

*Additional Notes*

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

**Claims**

1. A method, comprising:

   generating a short training field, in the following also referred to as STF, of a physical-layer protocol data unit, in the following also referred to as PPDU, by using a predefined STF base sequence (1010); and
   performing a wireless communication in a 240MHz, 480MHz or 640MHz bandwidth with the PPDU (1020).

2. An apparatus (910), comprising:

   a transceiver (916) configured to transmit and receive wirelessly; and
   a processor (912) coupled to the transceiver (916) and configured to perform operations comprising:

      generating a short training field, in the following also referred to as STF, of a physical-layer protocol data unit, in the following also referred to as PPDU, by using a predefined STF base sequence; and
      performing, via the transceiver (916), a wireless communication in a 240MHz, 480MHz or 640MHz bandwidth with the PPDU.

3. The method of Claim 1 or the apparatus of Claim 2, wherein the predefined STF base sequence comprises an Institute of Electrical and Electronics Engineers, in the following also referred to as IEEE, 802.11ax 80MHz high-efficiency, in the following also referred to as HE, STF, in the following also referred to as HE-STF, or IEEE 802.11be extreme-high throughput, in the following also referred to as EHT, STF, in the following also referred to as EHT-STF, sequence.

4.  The method or the apparatus of Claim 3, wherein the generating of the STF comprises repeating the 80MHz HE-STF or EHT-STF sequence and applying a combination of coefficients on each 80MHz frequency subblock or segment of the 240MHz, 480MHz or 640MHz bandwidth.

5.  The method of Claim 1, 3, or 4, or the apparatus of any one of Claims 2 to 4, wherein the generating of the STF comprises generating the STF of a downlink, in the following also referred to as DL, multi-user, in the following also referred to as MU, PPDU or an uplink, in the following also referred to as UL, trigger-based, in the following also referred to as TB, PPDU based on:

$$M = [-1, -1, -1, 1, 1, 1, -1, 1, 1, 1, -1, 1, 1, -1, 1];$$

$$EHTS80\_1x = [M, 1, (-1) * M, 0, (-1) * M, 1, (-1) * M];$$

and

$$EHTS80\_2x = [M, -1, M, -1, -M, -1, M, 0, -M, 1, M, 1, -M, 1, -M],$$

wherein:

M denotes an 80MHz sub-sequence,
EHTS80_1x denotes an 80MHz segment sequence for the DL MU PPDU, and
EHTS80_2x denotes an 80MHz segment sequence for the UL TB PPDU.

6.  The method or the apparatus of Claim 5, wherein the generating of the STF comprises generating an ultra-high reliability, in the following also referred to as UHR, STF, in the following also referred to as UHR-STF, of a DL MU PPDU using a combination of optimized coefficients such that the STF is used in the wireless communication in the 240MHz bandwidth, and wherein:

$$UHRS_{-1520:16:1520} = [c(1) * EHTS80\_1x, 0, c(2) * EHTS80\_1x, 0, c(3) * EHTS80\_1x] * (1 + j) / sqrt(2),$$

$UHRS_{-1520:16:1520}$ denotes the UHR-STF of the DL MU PPDU,
each of c(1), c(2) and c(3) represents a respective optimized coefficient, a vector C of the combination of the optimized coefficients = [c(1) c(2) c(3)], and

$$C = [1\ -1\ -1]\ or\ C = [-1\ -1\ 1]\ or\ C = [-1\ 1\ 1].$$

7.  The method or the apparatus of Claim 5, wherein the generating of the STF comprises generating an UHR-STF of an UL TB PPDU using a combination of optimized coefficients such that the STF is used in the wireless communication in the 240MHz bandwidth, and wherein:

$$UHRS_{-1528:8:1528} = [c(1) * EHTS80\_2x, 0, c(2) * EHTS80\_2x, 0, c(3) * EHTS80\_2x] * (1 + j) / sqrt(2),$$

$UHRS_{-1528:8:1528}$ denotes the UHR-STF of the UL TB PPDU,
each of c(1), c(2) and c(3) represents a respective optimized coefficient, a vector C of the combination of the optimized coefficients = [c(1) c(2) c(3)], and

$$C = [1\ -1\ -1]\ or\ C = [-1\ -1\ 1]\ or\ C = [-1\ 1\ 1].$$

8. The method or the apparatus of Claim 5, wherein the generating of the STF comprises generating an UHR-STF of a DL MU PPDU using a combination of optimized coefficients such that the STF is used in the wireless communication in the 480MHz bandwidth, and wherein:

$$UHRS_{-3056:16:3056} = [c(1) * EHTS80\_1x, 0, c(2) * EHTS80\_1x, 0, c(3) * EHTS80\_1x, 0, c(4) * EHTS80\_1x, 0, c(5) * EHTS80\_1x, 0, c(6) * EHTS80\_1x] * (1 + j) / sqrt(2),$$

$UHRS_{-3056:16:3056}$ denotes the UHR-STF of the DL MU PPDU,
each of $c(1)$, $c(2)$, $c(3)$, $c(4)$, $c(5)$ and $c(6)$ represents a respective optimized coefficient,
a vector C of the combination of the optimized coefficients = [c c(1) c(2) c(3) c(4) c(5) c(6)], and

$$C = [1\ 1\ 1\ 1\ -1\ -1]\ or\ C = [1\ 1\ -1\ -1\ -1\ -1].$$

9. The method or the apparatus of Claim 5, wherein the generating of the STF comprises generating an UHR-STF of an UL TB PPDU using a combination of optimized coefficients such that the STF is used in the wireless communication in the 480MHz bandwidth, and wherein:

$$UHRS_{-3064:8:3064} = [c(1) * EHTS80\_2x, 0, c(2) * EHTS80\_2x, 0, c(3) * EHTS80\_2x, 0, c(4) * EHTS80\_2x, 0, c(5) * EHTS80\_2x, 0, c(6) * EHTS80\_2x] * (1 + j) / sqrt(2),$$

$UHRS_{-3064:8:3064}$ denotes the UHR-STF of the UL TB PPDU,
each of $c(1)$, $c(2)$, $c(3)$, $c(4)$, $c(5)$ and $c(6)$ represents a respective optimized coefficient,
a vector C of the combination of the optimized coefficients = [c(1), c(2), c(3), c(4), c(5) and c(6)], and

$$C = [1\ 1\ 1\ -1\ -1\ 1]\ or\ C = [1\ 1\ -1\ 1\ -1\ -1].$$

10. The method or the apparatus of Claim 5, wherein the generating of the STF comprises generating an UHR-STF of a DL MU PPDU using a combination of optimized coefficients such that the STF is used in the wireless communication in the 640MHz bandwidth, and wherein:

$$UHRS_{-3056:16:3056} = [c(1) * EHTS80\_1x, 0, c(2) * EHTS80\_1x, 0, c(3) * EHTS80\_1x, 0, c(4) * EHTS80\_1x, 0, c(5) * EHTS80\_1x, 0, c(6) * EHTS80\_1x, 0, c(7) * EHTS80\_1x, 0, c(8) * EHTS80\_1x] * (1 + j) / sqrt(2),$$

$UHRS_{-3056:16:3056}$ denotes the UHR-STF of the DL MU PPDU,
each of $c(1)$, $c(2)$, $c(3)$, $c(4)$, $c(5)$, $c(6)$, $c(7)$ and $c(8)$ represents a respective optimized coefficient,
a vector C of the combination of the optimized coefficients = [c(1) c(2) c(3) c(4) c(5) c(6) c(7) c(8)], and

$$C = [1\ -1\ -1\ -1\ -1\ -1\ -1\ 1]\ or\ C = [-1\ 1\ 1\ 1\ 1\ 1\ 1\ -1].$$

11. The method or the apparatus of Claim 5, wherein the generating of the STF comprises generating an UHR-STF of an UL TB PPDU using a combination of optimized coefficients such that the STF is used in the wireless communication in the 640MHz bandwidth, and wherein:

$$UHRS_{-3064:8:3064} = [c(1) * EHTS80\_2x, 0, c(2) * EHTS80\_2x, 0, c(3) *$$

$$EHTS80\_2x, 0, c(4) * EHTS80\_2x, 0, c(5) * EHTS80\_2x, 0, c(6) * EHTS80\_2x, 0, c(7)$$

$$* EHTS80\_2x, 0, c(8) * EHTS80\_2x] * (1 + j) / sqrt(2),$$

$UHRS_{-3064:8:3064}$ denotes the UHR-STF of the UL TB PPDU,
each of c(1), c(2), c(3), c(4), c(5), c(6), c(7) and c(8) represents a respective optimized coefficient,
a vector C of the combination of the optimized coefficients = [c(1) c(2) c(3) c(4) c(5) c(6) c(7) c(8)], and

$$C = [1\ 1\ 1\ -1\ 1\ 1\ 1\ -1]\ or\ C = [1\ 1\ 1\ -1\ 1\ 1\ -1\ -1].$$

100

STA
110

WIRELESS COMMUNICATIONS IN WITH SHORT TRAINING FIELD (STF) SEQUENCE
DESIGN IN WIDE BANDWIDTH(S)

STA
120

# FIG. 1

(A)          <u>200</u>       (B)                (C)

## BW240

| # | RU/MRU Type | # of RU/MRU |
|---|---|---|
| 1 | 26 | 108 |
| 2 | 52 | 48 |
| 3 | 106 | 24 |
| 4 | 242 | 12 |
| 5 | 484 | 6 |
| 6 | 996 | 3 |
| 7 | 52+26 | 24 |
| 8 | 106+26 | 12 |
| 9 | 484+242 | 12 |
| 10 | 996+484 | 8 |
| 11 | 2x996 | 3 |
| 12 | 2x996+484 | 6 |
| 12 | 3x996 | 1 |

Total: 267

## BW480

| # | RU/MRU Type | # of RU/MRU |
|---|---|---|
| 1 | 26 | 216 |
| 2 | 52 | 96 |
| 3 | 106 | 48 |
| 4 | 242 | 24 |
| 5 | 484 | 12 |
| 6 | 996 | 6 |
| 7 | 52+26 | 48 |
| 8 | 106+26 | 24 |
| 9 | 484+242 | 24 |
| 10 | 996+484 | 12 |
| 11 | 2x996 | 3 |
| 12 | 2x996+484 | 24 |
| 13 | 3x996 | 8 |
| 14 | 3x996+484 | 16 |
| 15 | 4x996 | 3 |
| 16 | 5x996 | 6 |
| 17 | 6x996 | 1 |

Total: 571

## BW640

| # | RU/MRU Type | # of RU/MRU |
|---|---|---|
| 1 | 26 | 288 |
| 2 | 52 | 128 |
| 3 | 106 | 64 |
| 4 | 242 | 32 |
| 5 | 484 | 16 |
| 6 | 996 | 8 |
| 7 | 52+26 | 64 |
| 8 | 106+26 | 32 |
| 9 | 484+242 | 32 |
| 10 | 996+484 | 16 |
| 11 | 2x996 | 4 |
| 12 | 2x996+484 | 24 |
| 13 | 3x996 | 8 |
| 14 | 3x996+484 | 16 |
| 15 | 4x996 | 2 |
| 16 | 6x996 | 4 |
| 17 | 8x996 | 1 |

Total: 739

# FIG. 2

13

FIG. 3

400

FIG. 4

500

FIG. 5

600

STF & DATA-PAPR(over all RU), BW480, UL TB PPDU, 4x IFFT

FIG. 6

FIG. 7

800

FIG. 8

900 ⌐

APPARATUS
910

PROCESSOR 912

MEMORY
914

TRANSCEIVER
916

APPARATUS
920

PROCESSOR 922

TRANSCEIVER
926

MEMORY
924

# FIG. 9

1000

GENERATE A A SHORT TRAINING FIELD (STF) OF A PHYSICAL-LAYER PROTOCOL DATA UNIT (PPDU) BY USING A PREDEFINED STF BASE SEQUENCE

1010

PERFORM A WIRELESS COMMUNICATION IN A 240MHz, 480MHz OR 640MHz BANDWIDTH WITH THE PPDU

1020

# FIG. 10

Europäisches
Patentamt

European
Patent Office

Office européen
des brevets

## EUROPEAN SEARCH REPORT

Application Number

**EP 23 19 6766**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/101160 A1 (LG ELECTRONICS INC [KR]) 27 May 2021 (2021-05-27) * paragraphs [0457] - [0471] * & US 2022/407754 A1 (PARK EUNSUNG [KR] ET AL) 22 December 2022 (2022-12-22) * paragraphs [0009], [0400] - [0420] * ----- | 1-6,8,10 | INV. H04L27/26 |
| X | US 2019/288895 A1 (CHEN JIALING LI [US] ET AL) 19 September 2019 (2019-09-19) * paragraphs [0154] - [0160]; figures 13-15 * ----- | 1-5,7,9, 11 | |

|  |  |  | TECHNICAL FIELDS SEARCHED (IPC) |
|---|---|---|---|
|  |  |  | H04L |

The present search report has been drawn up for all claims

| Place of search | Date of completion of the search | Examiner |
|---|---|---|
| Berlin | 31 January 2024 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 6766**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-01-2024**

| Patent document cited in search report | | Publication date | Patent family member(s) | | Publication date |
|---|---|---|---|---|---|
| WO 2021101160 | A1 | 27-05-2021 | US | 2022407754 A1 | 22-12-2022 |
| | | | WO | 2021101160 A1 | 27-05-2021 |
| US 2019288895 | A1 | 19-09-2019 | CN | 111886839 A | 03-11-2020 |
| | | | CN | 112219377 A | 12-01-2021 |
| | | | US | 2019288895 A1 | 19-09-2019 |
| | | | US | 2019289612 A1 | 19-09-2019 |
| | | | WO | 2019178493 A1 | 19-09-2019 |
| | | | WO | 2019178511 A1 | 19-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63375554